# EUROPÄISCHE PATENTANMELDUNG

(11) **EP 1 580 348 A2**
(43) Veröffentlichungstag der Anmeldung: **28.09.2005**
(21) Anmeldenummer: 05005359.4
(22) Anmeldetag: 11.03.2005
(51) Int. Cl.: E04G 9/04, E04G 9/05, B29C 65/00

(54) **Schalungsbauteil**

(30) Priorität: 26.03.2004 DE 102004014944
(71) Anmelder: DOKA Industrie GmbH, A-3300 Amstetten (AT)
(72) Erfinder: Frenzl, Joseph, 3300 Winklarn (AT)
(74) Vertreter: HOFFMANN EITLE

(57) **Zusammenfassung**

Ein Schalungsbauteil (10) weist zumindest eine Schaltafel (14) aus Holz und/oder Kunststoff und zumindest ein thermoplastisches Element (30) auf, das in die Schaltafel (14) eingesetzt und stoffschlüssig mit dem Holz und/oder Kunststoff der Schaltafel (14) und/oder eines Trägers verbunden ist.

## Beschreibung

### Technisches Gebiet

Die Erfindung betrifft ein Schalungsbauteil mit zumindest einer Schaltafel aus Holz und/oder Kunststoff.

Auf dem Gebiet des Bauwesens werden verschiedenste Schalungsbauteile verwendet, um einen zu betonierenden Raum, wie eine Wand oder eine Decke, zu umgeben. Die Schalungsbauteile können beispielsweise bei Deckenschalungen Schaltafeln sein, die in einer Vielzahl dicht aneinanderanliegend horizontal angeordnet werden, so dass nach Anbringung einer Randbegrenzung eine Decke gegossen werden kann. Ferner gibt es Schalungsbauteile, die aus zumindest einer Schaltafel und einer Unterkonstruktion, beispielsweise in Form eines oder mehrerer Träger oder Kanthölzer oder eines Rahmens bestehen. Derartige Bauteile können als integrale Schalungselemente gelagert, transportiert und eingesetzt werden, indem sie, üblicherweise über die Rahmen oder Träger, fest miteinander verbunden werden.

### Stand der Technik

Für die Befestigung von Schaltafeln auf einer Unterkonstruktion beispielsweise in Form von mehreren Trägern ist es bekannt, diese Befestigung durch Nägel, Klammern oder Schrauben vorzunehmen. Die Schrauben können entweder von der Rückseite in die Schaltafel eingedreht werden. Alternativ werden die Schrauben von der Vorderseite in die Schaltafel eingedreht, ihr Kopf wird in die Schaltafel versenkt und mit der Schaltafel eben verspachtelt. Schließlich ist es bekannt, eine Schaltafel mittels Klebstoff auf einem Träger zu befestigen.

Ferner sind verschiedene Verfahren bekannt, um Schäden, wie z.B. Eindrückungen oder Löcher in Schaltafeln zu reparieren. Hierzu wird die Schaltafel üblicherweise ausgefräst, und in die Ausfräsung wird ein Reparaturplättchen eingebracht. Dieses kann durch Kleben, Klammern, Nageln oder Schrauben befestigt werden. Die genannten Verfahren, sowohl zum Befestigen von Schaltafeln auf einem oder mehreren Trägern, sowie die Verfahren zum Reparieren von Schaltafeln leiden im Wesentlichen unter langen Prozesszeiten, einer geringen Dauerhaftigkeit der Verbindung, Unzulänglichkeiten im Hinblick auf die Ebenheit und Glattheit der Oberfläche und hinsichtlich der Korrosionsanfälligkeit. Ferner ist häufig eine Nachbehandlung der Verbindung erforderlich.

Aus der WO 98/42988 ist ein Verfahren zur Verankerung von Verbindungselementen in einem Material mit Poren oder Hohlräumen sowie ein hierfür geeignetes Verbindungselement bekannt. Hierbei wird in den zu verbindenden Teilen eine Bohrung mit einem geschlossenen Ende vorgesehen, und ein Verbindungsstift wird in die Bohrung eingeführt. Dem Verbindungsstift wird Energie gezielt zugeführt, so dass dieser plastifiziert wird und sich makroskopische Verankerungen in den zu verbindenden Teilen bilden.

### Darstellung der Erfindung

Der Erfindung liegt die Aufgabe zugrunde, ein Schalungsbauteil zu schaffen, das im Hinblick auf die Möglichkeit der Verbindung mit einer Unterkonstruktion und/oder der Reparaturmöglichkeit unter zumindest einem der folgenden Gesichtspunkte verbessert ist: Prozesszeit, Lösbarkeit, Dauerhaftigkeit, Ebenheit der Oberfläche, Glattheit der Oberfläche, Notwendigkeit von Nachbehandlung, Korrosionsbeständigkeit.

Die Lösung dieser Aufgabe erfolgt durch das im Anspruch 1 beschriebene Schalungsbauteil.

Demzufolge weist dieses zum einen zumindest eine Schaltafel aus Holz und/oder Kunststoff auf. Ferner ist zumindest ein thermoplastisches Element vorgesehen, das in die Schaltafel eingesetzt und stoffschlüssig mit dem Holz und/oder Kunststoff der Schaltafel und/oder eines Trägers verbunden ist. Hierbei ist anzumerken, dass es sich bei einem Träger im Sinne der vorliegenden Anmeldung um ein beliebiges, tragendes oder in irgendeiner Weise stützendes, oder in sonstiger Weise mit der Schaltafel zu verbindendes Bauteil handeln kann. Beispielsweise können auch Kanthölzer und dergleichen als Träger in diesem Sinne wirken.

Bei dem thermoplastischen Element kann es sich, wie nachfolgend noch genauer ausgeführt, um einen Dübel oder eine Art Bolzen zur Verbindung der Schaltafel mit einem Träger handeln. Alternativ kann das thermoplastische Element ein Reparatureinsatz oder eine Folie zur Befestigung eines Reparatureinsatzes sein. Wie erwähnt, kann die Schaltafel aus Holz oder Kunststoff bestehen. Ferner ist denkbar, dass die Schaltafel einen Holzkern aufweist, der zumindest teilweise mit Kunststoff ummantelt ist. Die beschriebenen Materialkombinationen gelten in gleicher Weise für einen Träger, mit dem die Schaltafel zu verbinden ist. In sämtlichen Ausführungsformen gilt, dass die Verbindung und/oder die Reparatur bei äußerst kurzen Prozesszeiten durchgeführt werden kann. Hierzu wird die Schaltafel beispielsweise vorgebohrt, um das thermoplastische Element einsetzen zu können. Im Fall der Befestigung an einem Träger muss dieser nicht notwendigerweise vorgebohrt werden, es kann jedoch günstig sein, auch diesen vorzubohren. Das thermoplastische Element wird beispielsweise in die Bohrung oder Fräsung der Schaltafel eingesetzt und nachfolgend stoffschlüssig mit der Schaltafel und/oder dem Träger verbunden.

Zu diesem Zweck wird das thermoplastische Element beispielsweise mit Ultraschall beaufschlagt. Dies führt zu einem zumindest stellenweise Plastifizieren des thermoplastischen Elements, so dass das plastifizierte Material desselben zumindest stellenweise in Poren und/oder kleine Hohlräume des Materials der Schaltafel und/oder des Trägers eindringt. Wenn die Energiezufuhr, also beispielsweise die Beaufschlagung mit Ultraschall, endet, verfestigt sich das thermoplastische Element und ist hierdurch stoffschlüssig mit dem Material der Schaltafel und/oder des Trägers verbunden. Hierdurch ist dieses fest verankert und sorgt für eine dauerhafte Befestigung der Schaltafel an einem Träger. Darüber hinaus kann auf diesem Weg mittels des thermoplastischen Elements ein Reparatureinsatz dauerhaft mit der Schaltafel verbunden werden. Dies gilt in gleicher Weise für den Fall, dass das thermoplastische Element selbst ein Reparatureinsatz ist.

Bei Versuchen hat sich ergeben, dass mittels des beschriebenen Verfahrens äußerst kurze Prozesszeiten möglich sind. Ferner kann insbesondere durch eine geeignete Ausbildung des thermoplastischen Elements, indem dessen Oberfläche nämlich mit der Oberfläche der Schaltafel fluchtet, eine ebene und glatte Oberfläche erreicht werden. Im Rahmen des Verfahrens ist keine Nachbehandlung erforderlich, und durch den beschriebenen Stoffschluss ist für Dichtigkeit gesorgt. Schließlich sind keine Elemente aus Metall, wie z.B. die bekannten Klammern, Nägel oder Schrauben beteiligt, so dass sich das erfindungsgemäße Schalungsbauteil durch eine geringe Korrosionsanfälligkeit auszeichnet. Es sei ferner erwähnt, dass insbesondere in derjenigen Ausführungsform, in der eine Schaltafel mit einem Träger verbunden wird, in vorteilhafter Weise eine Lösbarkeit gegeben sein kann. Hinsichtlich des beschriebenen Verfahrens kann die Vorgehensweise gemäß der oben zitierten WO 98/42988 gewählt werden, deren Offenbarung hiermit vollumfänglich zum Gegenstand der vorliegenden Anmeldung gemacht wird.

Bevorzugte Weiterbildungen des erfindungsgemäßen Schalungsbauteils sind in den weiteren Ansprüchen beschrieben.

Wenngleich das Einsetzen des thermoplastischen Elements in die Schaltafel in jeder geeigneten Weise vorgenommen werden kann, wird derzeit bevorzugt, dass die Schaltafel eine Bohrung und/oder eine Fräsung aufweist, in welche das thermoplastische Element eingesetzt werden kann. Die Bohrung und/oder Fräsung kann durch die Schaltafel hindurch verlaufen, um ein geeignetes thermoplastisches Element vollständig durch die Schaltafel zu stecken und ferner in eine Unterkonstruktion, beispielsweise in Form eines Trägers, einzuführen und dort mittels des oben beschriebenen Verfahrens stoffschlüssig zu verbinden.

Bei Versuchen hat sich eine Stufenbohrung als günstig herausgestellt, um durch geeignete Abstufung des thermoplastischen Elements ergänzend eine formschlüssige Verbindung herzustellen.

Für das Plastifizieren des thermoplastischen Elements, um die stoffschlüssige Verbindung nach dem Erstarren auszubilden, sind verschiedenste Verfahren denkbar. Derzeit wird jedoch bevorzugt, das thermoplastische Element mittels Ultraschall einzupressen. In diesem Zusammenhang sei im Hinblick auf Einzelheiten nochmals auf die oben genannte WO 98/42988 verwiesen.

Für die eine bevorzugte Ausführungsform, bei der eine Verbindung der Schaltafel mit zumindest einem Träger vorgesehen ist, ist das thermoplastische Element in vorteilhafter Weise als Verbindungselement ausgebildet.

Insbesondere kann das thermoplastische Element in vorteilhafter Weise die Form eines Dübels aufweisen, um die Schaltafel mit dem Träger zu verbinden.

In diesem Fall hat es sich ferner als vorteilhaft erwiesen, wenn der Dübel Bereiche mit unterschiedlichem Durchmesser aufweist. Mit anderen Worten, besitzt der Dübel zumindest eine Stufe entlang seiner Längserstreckung, so dass die beschriebene, stoffschlüssige Verbindung durch eine formschlüssige Verbindung an zumindest einer Stufe, die komplementär an der Schaltafel und/oder dem Träger ausgebildet ist, unterstützt wird.

In einer anderen Ausführungsform kann das thermoplastische Element einen Reparatureinsatz bilden. Mit anderen Worten, wird eine schadhafte Stelle der Schaltafel in geeigneter Weise ausgefräst, das thermoplastische Element wird als Reparatureinsatz eingesetzt, mit Energie, beispielsweise durch Ultraschall beaufschlagt, so dass sich die oben beschriebene stoffschlüssige Verbindung ergibt. Auch hierfür gelten die oben bereits erwähnten Vorteile.

In der Praxis wurden ferner gute Erfahrungen damit gemacht, das thermoplastische Element so vorzusehen, dass es mit der Oberfläche der Schaltafel fluchtet. Hierdurch kann ohne Nachbehandlung eine für die gestellten Anforderungen günstige, durchgehend glatte und ebene Oberfläche gewährleistet werden, so dass in vorteilhafter Weise eine ebenso glatte Betonoberfläche gebildet werden kann.

Schließlich wird derzeit eine Ausführungsform bevorzugt, bei der das thermoplastische Element eine Folie, mit anderen Worten ein äußerst dünnes Plättchen ist. In dieser Form kann das thermoplastische Element zur Befestigung anderer Elemente verwendet werden, indem es wiederum mit Energie, beispielsweise in Form von Ultraschall, beaufschlagt wird, und sich stoffschlüssig mit dem Holz und/oder Kunststoff der Schaltafel und/oder des Trägers sowie dem Material des genannten anderen Elements verbindet.

Insbesondere kann das thermoplastische Element in diesem Fall mit einem Reparatureinsatz verbunden sein, der mit der Oberfläche der Schaltafel fluchtet. Diese Verbindung kann, bevorzugt in einem Arbeitsgang mit der Verbindung mit der Schaltafel, ebenfalls durch das vorangehend beschriebene Plastifizieren und nachfolgende Erstarren ausgebildet werden. In dieser Weise ist bei Realisierung der oben genannten Vorteile eine Reparatur einer Schaltafel mit geringem Aufwand möglich.

### Kurze Beschreibung der Zeichnungen

Nachfolgend werden beispielhaft in den Figuren dargestellte Ausführungsformen der Erfindung näher erläutert. Es zeigen:
- Fig. 1: eine perspektivische Explosionsansicht einer ersten Ausführungsform der Erfindung; und
- Fig. 2: eine perspektivische Explosionsansicht einer zweiten Ausführungsform der Erfindung.

### Ausführliche Beschreibung bevorzugter Ausführungsformen der Erfindung

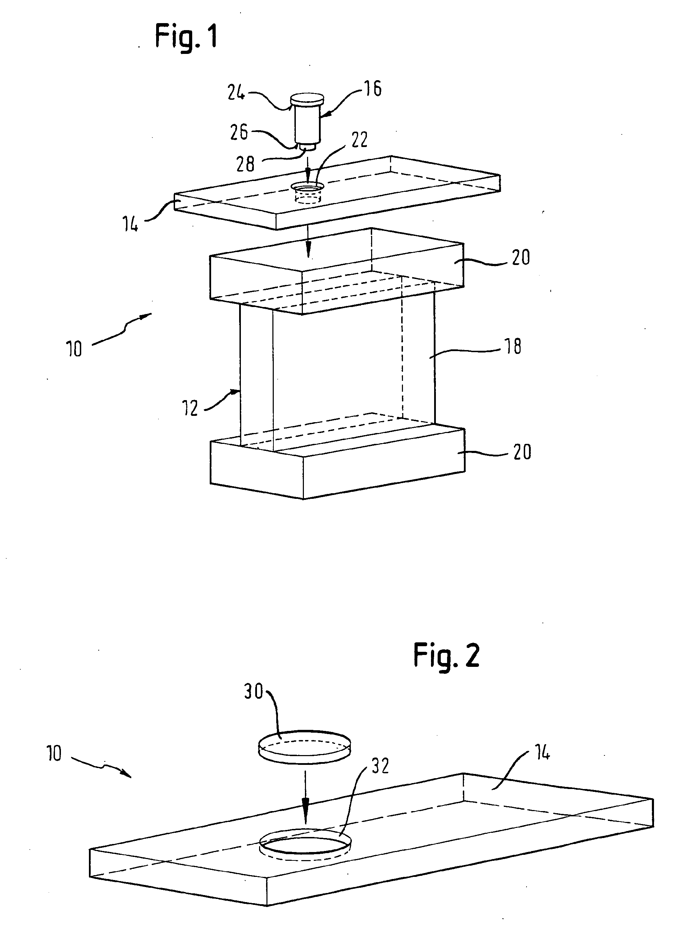

In Fig. 1 ist in einer perspektivischen Explosionsansicht ein Ausschnitt eines Schalungsbauteils 10 gezeigt, das in dem dargestellten Fall einen Träger 12, eine Schaltafel 14 und ein thermoplastisches Element 16 aufweist. Der Träger besteht in dem dargestellten Fall aus einem Steg 18 und zwei sogenannten Gurten 20. Es sei an dieser Stelle nochmals erwähnt, dass es sich lediglich um ein Beispiel eines Trägers 12 handelt. Insbesondere kann der gezeigte Träger 12 durch ein beliebiges anderes, mit der Schaltafel 14 zu verbindendes, diese tragendes oder stützendes Bauteil ersetzt werden. Als Beispiel hierfür seien Kanthölzer genannt. Zur Verbindung der Schaltafel 14 mit einem der Gurte 20 wird bei dem gezeigten Beispiel die Schaltafel 14 mit einer durchgehenden und mit einer Stufe versehenen Bohrung 22 versehen. Der Gurt 20 des Trägers 12 ist in dem gezeigten Fall nicht vorgebohrt, er kann jedoch vorgebohrt sein. Der Dübel 16 ist weitgehend zylindrisch und weist zum einen in seinem oberen Bereich eine erste Stufe 24 auf, die der Stufe in der Bohrung 22 entspricht. Durch das Aufliegen des breiten Abschnitts oberhalb der Stufe 24 auf der in der Schaltafel 14 ausgebildeten Stufe erfolgt ein vorteilhafter Formschluss. Wie in Fig. 1 zu erkennen, weist der Dübel 16 zum anderen an demjenigen Ende, das in den Gurt 20 des Trägers 12 einzuführen ist, eine weitere Stufe 26 mit einem am freien Ende ausgebildeten Bereich 28 mit vergleichsweise geringem Durchmesser auf. Es sei erwähnt, dass der Dübel 16 in Fig. 1 nur schematisch dargestellt ist, und dass dasjenige Ende des Dübels 16, das in den Gurt 20 des Trägers 12 einzusetzen ist, auch mit mehreren Abstufungen und/oder am Ende spitz zulaufend gestaltet sein kann, um das Einpressen in den Gurt 20 des Trägers 12 zu erleichtern.

Im Rahmen des Verfahrens zur Herstellung des erfindungsgemäßen Schalungsbauteils 10 wird die Schaltafel 14 mit der beschriebenen Bohrung 22 versehen, und der Dübel 16 wird nachfolgend unter Beaufschlagung von Ultraschall durch die Bohrung 22 eingesetzt und dringt in das Material des Gurtes 20 des Trägers 12 ein. Durch die Beaufschlagung mit Ultraschall erfolgt ein zumindest teilweises Plastifizieren, so dass Material des thermoplastischen Dübels 16 in Hohlräume und Fehlstellen der Schaltafel und/oder des Trägers, die aus Holz und/oder Kunststoff bestehen können, eindringt, und nach dem anschließenden Verfestigen darin verankert ist. Hierdurch wird ferner die Schaltafel 14 an dem Träger 12 gehalten. Diese Verbindung kann an weiteren Stellen und/oder mit weiteren Trägern ausgebildet werden.

Fig. 2 zeigt schematisch eine zweite Ausführungsform, bei der das thermoplastische Element ein Reparatureinsatz 30 ist, der in eine Fräsung 32 der Schaltafel 14 eingesetzt wird. Hierzu wird die Schaltafel 14 durch Bohren oder Fräsen mit der Fräsung 32 oder allgemein einer Vertiefung versehen. Die Form des Reparatureinsatzes 30 ist an die Form der Fräsung 32 angepasst, so dass dieser darin eingesetzt werden kann. Nachfolgend wird er, wie vorangehend beschrieben, beispielsweise mittels Ultraschall mit Energie beaufschlagt, so dass er sich zumindest teilweise plastifiziert, sein Material in das Holz- oder Kunststoffmaterial der Schaltafel 14 eindringt und nach dem Verfestigen darin verankert ist.

## Patentansprüche

1. Schalungsbauteil (10) mit zumindest einer Schaltafel (14) aus Holz und/oder Kunststoff und zumindest einem thermoplastischen Element (16, 30), das in die Schaltafel (14) eingesetzt und stoffschlüssig mit dem Holz und/oder Kunststoff der Schaltafel (14) und/oder eines Trägers (12) verbunden ist.

2. Schalungsbauteil nach Anspruch 1,
**dadurch gekennzeichnet, dass**
die Schaltafel (14) eine Bohrung (22) und/oder eine Fräsung (32) aufweist.

3. Schalungsbauteil nach Anspruch 2,
**dadurch gekennzeichnet, dass**
die Schaltafel (14) eine Stufenbohrung (22) aufweist.

4. Schalungsbauteil nach zumindest einem der vorangehenden Ansprüche,
**dadurch gekennzeichnet, dass**
das thermoplastische Element (16, 30) mittels Ultraschall eingepresst wurde.

5. Schalungsbauteil nach zumindest einem der vorangehenden Ansprüche,
**dadurch gekennzeichnet, dass**
das thermoplastische Element als Verbindungselement (16) ausgebildet ist.

6. Schalungsbauteil nach zumindest einem der vorangehenden Ansprüche,
**dadurch gekennzeichnet, dass**
das thermoplastische Element ein Dübel (16) ist.

7. Schalungsbauteil nach Anspruch 6,
**dadurch gekennzeichnet, dass**
der Dübel (16) Bereiche (28) mit unterschiedlichem Durchmesser aufweist.

8. Schalungsbauteil nach zumindest einem der vorangehenden Ansprüche,
**dadurch gekennzeichnet, dass**
das thermoplastische Element einen Reparatureinsatz (30) bildet.

9. Schalungsbauteil nach zumindest einem der vorangehenden Ansprüche,
**dadurch gekennzeichnet, dass**
das thermoplastische Element (16, 30) mit der Oberfläche der Schaltafel (14) fluchtet.

10. Schalungsbauteil nach zumindest einem der vorangehenden Ansprüche,
**dadurch gekennzeichnet, dass**
das thermoplastische Element eine Folie ist.

11. Schalungsbauteil nach zumindest einem der vorangehenden Ansprüche,
**dadurch gekennzeichnet, dass**
das thermoplastische Element ferner mit einem Reparatureinsatz verbunden ist, der mit der Oberfläche der Schaltafel fluchtet.
